(19) Europäisches Patentamt
European Patent Office
Office européen des brevets

(11) EP 0 736 556 B1

(12) EUROPÄISCHE PATENTSCHRIFT

(45) Veröffentlichungstag und Bekanntmachung des Hinweises auf die Patenterteilung:
**07.05.2003 Patentblatt 2003/19**

(21) Anmeldenummer: **96810187.3**

(22) Anmeldetag: **26.03.1996**

(51) Int Cl.[7]: **C08G 59/50**, C08G 59/56, C08G 59/60, C08K 3/34, C08L 63/02
// (C08L63/02, C08K3:34)

(54) **Wollastonit enthaltendes, härtbares Epoxidharzgemisch**

Curable epoxy resin composition containing wollastonite

Composition de résin époxy durcissable contenant de la wollastonite

(84) Benannte Vertragsstaaten:
**CH DE ES FR GB IT LI NL**

(30) Priorität: **04.04.1995 CH 95695**

(43) Veröffentlichungstag der Anmeldung:
**09.10.1996 Patentblatt 1996/41**

(73) Patentinhaber: **Vantico AG**
**4057 Basel (CH)**

(72) Erfinder: **Beisele, Christian**
**4053 Basel (CH)**

(74) Vertreter: **Dannappel, Hans-Jochen, Dr. et al**
**Solvias AG,**
**Patente,**
**WKL-402.4.26,**
**Klybeckstrasse 191**
**4002 Basel (CH)**

(56) Entgegenhaltungen:
**EP-A- 0 414 975**
**EP-A- 0 722 964**
**DE-A- 4 206 733**
**US-A- 4 507 363**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 736 556 B1

## Beschreibung

Die vorliegende Erfindung betrifft ein Wollastonit enthaltendes Epoxidharzgemisch auf Basis einer aromatischen Glycidyletherverbindung und eines Polyoxyalkylenpolyamins als Härtungsmittel und deren Verwendung als Giessharzmasse, insbesondere zum Umhüllen oder Eingiessen von elektrischen oder elektronischen Bauteilen.

Füllstoffe enthaltende Giessharzmassen auf Basis von Epoxidharzen für elektrische Bauteile sind bekannt. So enthält beispielsweise die in der DE-OS 3 229 558 offenbarte Giessharzmasse aus einem aromatischen und cycloaliphatischen Epoxidharz sowie einem modifizierten Dicarbonsäureanhydrid als Füllstoff Kreide. Diese Giessharzmasse genügt hinsichtlich der Temperaturwechselbeständigkeit nicht den an sie gestellten Anforderungen.

Im US-Patent 5,098,505 werden aus einem Epoxidharz und einem Polyoxyalkylenpolyamin bestehende härtbare Gemische offenbart, die in einem der Komponenten ein thermoplastisches Polymer als Füllstoff enthalten und als Klebstoffe verwendet werden.

Es wurde nun gefunden, dass härtbare Epoxidharzgemische auf Basis einer aromatischen Glycidyletherverbindung und einem Polyoxyalkylenpolyamin, die als Füllstoff Wollastonit enthalten, wertvolle Giessharzmassen zum Umhüllen oder Imprägnieren von elektrischen oder elektronischen Bauteilen darstellen, da die Beschichtungen bzw. Imprägnierungen nach dem Härten eine gute Temperaturwechselbeständigkeit aufweisen und weniger rissanfällig sind.

Gegenstand vorliegender Erfindung ist somit ein härtbares Epoxidharzgemisch, bestehend aus

a) 90 bis 100 Gew.-% einer aromatischen Glycidyletherverbindung mit mehr als einer Glycidylethergruppe im Molekül und 0 bis 10 Gew-% eines von aromatischen Polyglycidylethern verschiedenes Epoxidharz, wobei die Summe der Epoxidharze 100 Gew.% beträgt,
b) 60 bis 100 Gew.-% eines Polyoxyalkylendi- oder -triamins und 0 bis 40 Gew.-% eines von Polyoxyalkylenaminen verschiedenen Härtungsmittels, wobei die Summe der Härtungsmittel 100 Gew.% beträgt,
c) Wollastonit oder einem anorganischen Füllstoff, der mehr als 50 Gew-% Wollastonit enthält, bezogen auf die gesamte Menge des anorganischen Füllstoffes, und gegebenenfalls
d) einem Härtungsbeschleuniger und
e) Glasfasern oder üblichen Zusatzmitteln für Giessharze auf Basis von Epoxidharzen.

Vorzugsweise besteht die Komponente a) des erfindungsgemässen Epoxidharzgemisches nur aus einem aromatisches Epoxidharz mit mehr als einer Glycidylethergruppe im Molekül, besonders bevorzugt aus einem Diglycidylether eines zweiwertigen Phenols.

Inbesondere enthält das erfindungsgemässe Epoxidharzgemisch als Komponente a) nur einen Diglycidylether von Bisphenol A oder Bisphenol F.

Aromatische Glycidyletherverbindungen sind bekannt und zum Teil im Handel erhältlich. Als solche Verbindungen können die in der Epoxidharztechnik üblichen Epoxidharze verwendet werden, wie beispielsweise die Polyglycidyl- oder Poly-(β-methylglycidyl)-ether, erhältlich durch Umsetzung einer Verbindung mit mindestens zwei freien phenolischen Hydroxygruppen und Epichlorhydrin oder β-Methylepichlorhydrin unter alkalischen Bedingungen oder in Anwesenheit eines sauren Katalysators und anschliessende Alkalibehandlung.
Die Glycidylether dieses Typs leiten sich beispielsweise von einkerningen Phenolen ab, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.

Epoxidverbindungen, die von den aromatischen Glycidyletherverbindungen verschieden sind, sind ebenfalls bekannt und zum Teil im Handel erhältlich. Als solche Verbindungen können beispielsweise die Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin in der Gegenwart von Basen, verwendet werden.
Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
Weiterhin können aromatische Polycarbonsäuren Verwendung finden, wie beispielsweise Phthalsäure, Isophthalsäure oder Terephthalsäure.

Ferner eignen sich auch als von den aromatischen Glycidyletherverbindungen verschiedenen Epoxidverbindungen die Polyglycidyl-oder Poly-(β-methylglycidyl)-ether, erhältlich durch Umsetzung einer Verbindung mit mindestens zwei freien alkoholischen Hydroxygruppen und Epichlorhydrin oder β-Methylepichlorhydrin unter alkalischen Bedingungen, oder in Anwesenheit eines sauren Katalysators und anschliessende Alkalibehandlung.

Die Glycidylether dieses Typs leiten sich beispielsweise von acyclischen Alkoholen ab, wie von Ethylenglykol, Diethylenglykol, Propan-1,2-diol, Propan-1,3-diol, Butan-1,4-diol, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N, N-Bis-(2-hydroxyethyl)-anilin oder p,p'-Bis-(2-hydroxyethylamino)-diphenylmethan.

Weitere geeignete Epoxidverbindungen für die Mischungskomponente a) sind die Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.

Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

Auch eignen sich die cycloaliphatischen Epoxidharze als Mischungskomponente a), beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Die in den erfindungsgemässen Epoxidharzgemischen als Komponente b) verwendeten Polyoxyalkylendi- und -triaminen sind bekannt und zum Teil im Handel erhältlich. Als Polyoxyalkylendiamine werden vorzugsweise Verbindungen der Formel I oder II eingesetzt

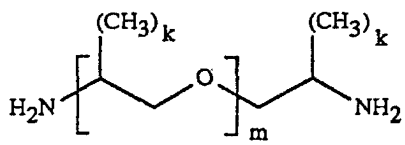

(I)

oder

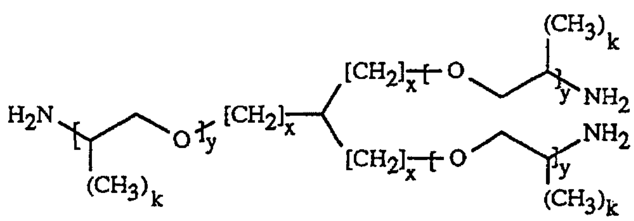

(II),

worin jedes k unabhängig voneinander null oder die Zahl 1 ist, m für eine Zahl von 6 bis 70 steht, jedes x unabhängig voneinander für null oder die Zahl 1 steht und jedes y unabhängig voneinander eine Zahl von 2 bis 50 bedeutet.

Langkettige Polyoxyalkylenketten in den genannten Polyaminen können auch verzweigt sein und somit mehr als zwei bzw. 3 Aminogruppen im Molekül aufweisen.

Bestimmte Polyoxyalkylenamine der oben angegebenen Formel sind unter der Bezeichnung Jeffamine® der Firma Texaco Chemical Co. kommerziell erhältlich.

Vorzugweise enthalten die erfindungsgemässen Epoxidharzgemische als Polyoxyalkylenamin ein Polyoxypropylendiamin oder ein Polyoxyethylendiamin, insbesondere ein Polyoxypropylendiamin der Formel III

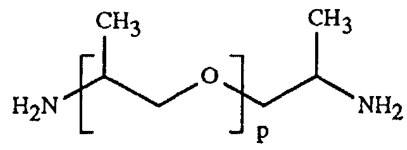 (III),

wobei p eine Zahl von 6 bis 40 ist.

Als Epoxidharzhärtungsmittel der Komponente b), das von den Polyoxyalkylenaminen verschieden ist, können im Prinzip alle üblichen Härtungsmittel für Epoxidharze eingesetzt werden, die mit den Polyoxyalkylenaminen nicht reagieren, wie beispielsweise Dicyandiamid, Polyamine sowie Polyole.

Als Polyamine können für die erfindungsgemässen härtbaren Epoxidharzgemische aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harze, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren und ferner Polyamine der Formel

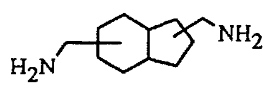 ,

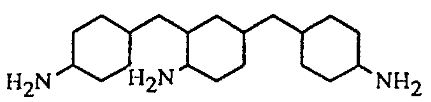 , 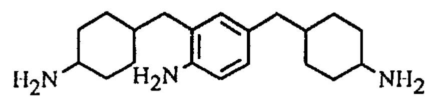 ,

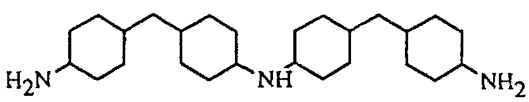 oder 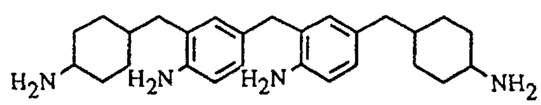

sowie Gemische dieser Aminoverbindungen.

Als Polyamine können für die erfindungsgemässen härtbaren Epoxidharzgemische auch die aminogruppenhaltigen Addukte, die bekanntlich durch Anlagerung von Aminen an Polyepoxidverbindungen erhalten werden oder die aminogruppenterminierten Polyamide einsetzen, die ebenfalls bekannte Verbindungen darstellen.

Als aliphatische Polyole für die erfindungsgemässen härtbaren Epoxidharzgemische eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die erfindungsgemässen härtbaren Epoxidharzgemische beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol oder 4-tert.-Butylphenol oder durch Kondensation mit Bisphenolen, solche der oben genannten Art, eingesetzt werden.

Gegebenenfalls können die erfindungsgemässen Epoxidharzgemische auch geeignete Härtungsbeschleuniger d) enthalten. Beispielsweise können bei Verwendung von Dicyandiamid, Polycarbonsäuren und deren Anhydriden als Beschleuniger tertiäre Amine oder deren Salze, quaternäre Ammoniumverbindungen oder Alkalimetallalkoxide verwendet werden.

Die Menge des eingesetzten Epoxidharzhärtungsmittels b) richtet sich nach der chemischen Natur des Härtungsmittels und nach den gewünschten Eigenschaften der härtbaren Mischung und des gehärteten Produktes. Die maximale Menge kann leicht ermittelt werden. Wenn das Härtungsmittel ein Amin ist, werden normalerweise 0,75 bis 1,25 Äquivalente Aminwasserstoff pro 1 Epoxidäquivalent eingesetzt. Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei der Verwendung von Polyphenolen als Härtungsmittel setzt man 0,75 bis 1,25 Äquivalente phenolische Hydroxylgruppen pro 1 Epoxidäquivalent ein. Katalytisch wirkende Härtungsmittel werden allgemein in Mengen von 1 bis 40 Gewichtsteilen pro 100 Gewichtsteile Epoxidharz eingesetzt.

Als anorganischen Füllstoff können die erfindungsgemässen Gemische einen der üblichen zu verwendenden Füllstoffe enthalten, wie beispielsweise Glas- oder Metallpulver, einen mineralischen Füllstoff, wie $Al_2O_3 \cdot nH_2O$, Calcit, Dolomit, Kaolinit oder Quarz, vorzugsweise in Form von Pulvern.

Vorzugsweise enthalten die erfindungsgemässen Gemische als Komponente c) nur Wollastonit.

Der in den erfindungsgemässen Gemischen zu mehr als 50 Gew.-%, bezogen auf die gesamte Menge der anorganischen Füllstoffe, enthaltene Wollastonit c) ist ein natürlich vorkommendes Calciumsilikat der Formel $Ca_3[Si_3O_9]$ von nadelförmiger Gestalt mit Partikelgrössen im Micronbereich. Auch der künstlich herstellbare Wollastonit weist nadelförmige Gestalt auf. Wollastonit ist im Handel erhältlich, beipielsweise unter der Bezeichnung Nyad® der Firma Nyco.

Vorzugsweise enthalten die erfindungsgemässen Epoxidharzgemische die Komponente c) in Form von Pulvern oder feinteiligen Nadeln mit einer Teilchengrössen von kleiner als 50 μm und beträgt diese mehr als 50 Gew.-% und weniger als 65 Gew.-%, bezogen auf die gesamte Menge der in den erfindungsgemässen Gemischen enthaltenen Komponenten.

Ausserdem können die erfindungsgemässen Epoxidharzgemische gewünschtenfalls noch Glasfasern und gegebenenfalls die in der Epoxidharztechnik für Giessharze üblichen Zusatzmittel e) enthalten. Solche üblichen Zusatzmittel sind beispielsweise Farbstoffe, Pigmente, wie Titandioxid oder Russ, Verarbeitungshilfsmittel, wie Gleitmittel, Verlaufmittel, Thixotropiermittel, Stabilisatoren, Flammhemmer, Haftvermittler zwischen Füllstoffen und Harz oder Formtrennmittel.

Beim Zusatz von Glasfasern und den üblichen Zusatzmitteln zu den erfindungsgemässen Epoxidharzgemischen richtet sich deren Menge nach dem spezifischen Anwendungszweck der erfindungsgemässen Gemische. Im allgemeinen beträgt dies weniger als 10 Gew.-%, bezogen auf die gesamte Menge der in den erfindungsgemässen Gemischen enthaltenen Komponenten.

Die erfindungsgemässen Gemische werden nach an sich bekannten Methoden, wie mit Hilfe bekannter Mischaggregate, beispielsweise Rührer, Kneter oder Walzen, hergestellt.

Die Härtung der erfindungsgemässen Gemische zu Formkörpern, Beschichtungen oder dergleichen erfolgt in für die Epoxidharztechnik üblicher Weise durch Erhitzen, wie sie beispielsweise im "Handbook of Epoxy Resins", 1967, von H. Lee und K.Neville beschrieben wird. Im allgemeinen liegt die Härtungstemperatur zwischen 50 und 200°C, vorzugsweise zwischen 80 und 130°C.

Die erfindungsgemässen Gemische eignen sich beispielsweise als Laminierharze oder Beschichtungsmassen, vorzugsweise als Giessharze sowie insbesondere als Umhüllungssysteme für elektrische und elektronische Bauteile, besonders solchen, die wechselnden Temperaturen ausgesetzt sind. Wie eingangs erwähnt, zeichnen sich die aus den erfindungsgemässen härtbaren Epoxidharzgemischen hergestellten Formstoffe und Beschichtungen durch eine gute Zähigkeit aus. Durch die gute Zähigkeit der erfindungsgemässen Umhüllungsmassen sowohl in der Wärme als auch in der Kälte sind bei Temperaturwechseln die Imprägnierungen bzw. Beschichtungen weniger rissanfällig.

Gegenstand vorliegener Erfindung ist daher auch die Verwendung der erfindungsgemässen Epoxidharzgemische als Giessharze und zum Umhüllen von elektrischen und elektronischen Bauteilen, insbesondere von Zündspulen mit blanken Eisenkernen.

Beispiel 1

In einen Knetmischer werden 296,7 g eines flüssigen Bisphenol A-diglycidylethers mit einem Epoxidäquivalentgewicht von 185, als Antischaummittel 0,03 g Silicone ®SH 5500 der Firma Toray Silicone Co. Ltd., Japan, und 3 g γ-Glycidyloxypropyltrimethoxysilan eingewogen. Das Gemisch wird auf 80°C erwärmt und während 30 Minuten (min) bei dieser Temperatur gerührt, wobei eine klare Lösung erhalten wird. Dann werden 598,2 g nadelförmiges Wollastonit mit einer mittleren Korngrösse von 20 μm, 2 g Bentone®SD-2 der Firma Kronos und 100 g Kurzglasfasem mit einer mittleren Faserlänge von < 1 mm vermischt und der oben erhaltenen Lösung zugegeben. Das erhaltene Gemisch wird bei 80°C weitere 30 min unter Normaldruck gerührt und anschliessend noch 1 Stunde (h) unter Vakuum bei 1 mbar. Man erhält eine hochviskose, beige Masse.

100 Gewichtsteile dieser Masse werden mit 16,3 Gewichtsteilen eines Polyoxypropylendiamins mit einem mittleren Molekulargewicht von 400, erhältlich als Jeffamine®D 400 von der Firma Texaco, gemischt, und anschliessend wird die Mischung evakuiert. Die Mischung weist bei 60°C eine Viskosität von 800 mPas auf, gemessen mit dem Mettler Rheomat 115, MS-C, und die Gelierzeit der Mischung beträgt bei 90°C 35 min.
Aus der härtbaren Mischung werden durch Härtung während 3 h bei 100°C Formkörper hergestellt, die folgende Eigenschaften aufweisen:

| | |
|---|---|
| $T_g$-Wert DSC*) TA 4000 (Mettler) | 40-50°C |
| Biegefestigkeit gemäss ISO 178 | 100-110 MPa |
| Randfaserdehnung gemäss ISO 178 | 2,0% |
| E-Modul aus Biegeversuch gemäss ISO 178 | 10000 MPa |
| Kritischer Spannungsintensitätsfaktor (Double Torsion Test) **) | 3,5 MPa $\sqrt{m}$ |
| Spezifische Bruchenergie (Double Torsion Test) **) | 1100 $J/m^2$ |

*) Differential Scanning Calorimeter

**) gemessen mit einer Zug-Druck-Maschine der Klasse 1 nach DIN 51 221

Anwendungsbeispiel

Zum Vergiessen von Zündspulen mit freiliegenden Eisenkernen werden diese etwa 2 h auf 80°C erwärmt und vor dem Vergiessen bei 0,4 mbar während 2 Minuten evakuiert. Die härtbare Mischung gemäss Beispiel 1 wird in einem Vorratsbehälter bei 70°C und 1 mbar entgast. Das Vergiessen der Zündspulen erfolgt nun bei 4 mbar. Die härtbare Mischung gemäss Beispiel 1 weist eine gute Imprägnierwirkung für die Sekundärwicklung der Zündspulen auf. Nach dem Vergiessen werden die eingegossenen Zündspulen 2 h bei 65°C und 1 h bei 90°C gehärtet. Die so hergestellten, eingegossenen Zündspulen zeigen nach einem Temperaturwechseltest von 2 h/-40°C ⇆ 2h/125°C während 240 h keine Risse in der Umhüllung, obwohl die Eisenkerne weder umwickelt noch mit einem Thermoplast umspritzt sind.

## Patentansprüche

1. Härtbares Epoxidharzgemisch, bestehend aus

    a) 90 bis 100 Gew.-% einer aromatischen Glycidyletherverbindung mit mehr als einer Glycidylethergruppe im Molekül und 0 bis 10 Gew-% eines von aromatischen Polyglycidylethern verschiedenes Epoxidharz, wobei die Summe der Epoxidharze 100 Gew.% beträgt,
    b) 60 bis 100 Gew.-% eines Polyoxyalkylendi- oder -triamins und 0 bis 40 Gew.-% eines von Polyoxyalkylenaminen verschiedenen Härtungsmittels, wobei die Summe der Härtungsmittel 100 Gew.% beträgt,
    c) Wollastonit oder einem anorganischen Füllstoff, der mehr als 50 Gew-% Wollastonit enthält, bezogen auf die gesamte Menge des anorganischen Füllstoffes, und gegebenenfalls
    d) einem Härtungsbeschleuniger und
    e) Glasfasern oder üblichen Zusatzmitteln für Giessharze auf Basis von Epoxidharzen.

2. Epoxidharzgemisch gemäss Anspruch 1, worin die Komponente a) nur aus einem aromatischen Epoxidharz mit mehr als einer Glycidylethergruppe im Molekül besteht.

3. Epoxidharzgemisch gemäss Anspruch 2, worin die Komponente a) aus einem Diglycidylether eines zweiwertigen Phenols besteht.

4. Epoxidharzgemisch gemäss Anspruch 2, worin die Komponente a) aus einem Diglycidylether von Bisphenol A oder Bisphenol F besteht.

5. Epoxidharzgemisch gemäss Anspruch 1, worin das Polyoxyalkylenamin b) eine Verbindung der Formel I oder II

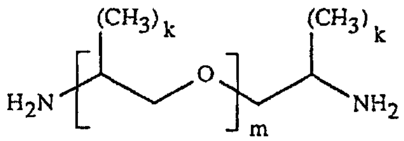

(I)

oder

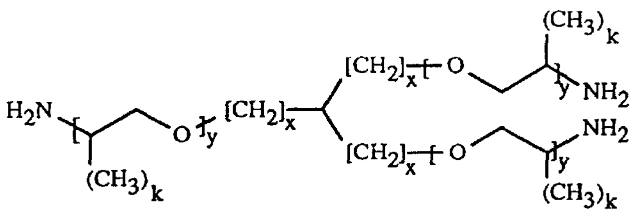

(II)

darstellt, worin jedes k unabhängig voneinander null oder die Zahl 1 ist, m für eine Zahl von 6 bis 70 steht, jedes x unabhängig voneinander für null oder die Zahl 1 steht und jedes y unabhängig voneinander eine Zahl von 2 bis 50 bedeutet.

**6.** Epoxidharzgemisch gemäss Anspruch 1, worin das Polyoxyalkylenamin b) ein Polyoxypropylendiamin der Formel III

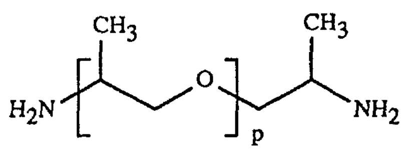

(III)

darstellt, worin p eine Zahl von 6 bis 40 ist.

**7.** Epoxidharzgemisch gemäss Anspruch 1, worin das vom Polyoxyalkylenamin verschiedene Härtungsmittel b) Dicyandiamid, ein anderes Polyamin oder ein Polyol ist.

**8.** Epoxidharzgemisch gemäss Anspruch 1, worin die Komponente c) aus Wollastonit besteht.

**9.** Giessharzmasse, bestehend aus dem härtbaren Epoxidharzgemisch gemäss Anspruch 1.

**10.** Verwendung des Epoxidharzgemisches gemäss Anspruch 1 als Giessharzmasse zum Umhüllen oder Eingiessen von elektrischen oder elektronischen Bauteilen.

## Claims

**1.** A curable epoxy resin mixture, consisting of

a) 90 to 100 % by weight of an aromatic glycidyl ether compound containing more than one glycidyl ether group in the molecule and 0 to 10 % by weight of an epoxy resin other than aromatic poly glycidyl ethers, the sum of the epoxy resins being 100 % by weight,
b) 60 to 100 % by weight of a polyoxyalkylenediamine or polyoxyalkylenetriamine and 0 to 40 % by weight of a curing agent other than polyoxyalkyleneamines, the sum of the curing agents being 100 % by weight,
c) wollastonite or an inorganic filler containing more than 50 % by weight of wollastonite, based on the total amount of the inorganic filler and, optionally,
d) a curing accelerator, and

e) glass fibres or customary additives for casting resins based on epoxy resins.

**2.** An epoxy resin mixture according to claim 1, wherein component a) consists of only one aromatic epoxy resin having more than one glycidyl ether group in the molecule.

**3.** An epoxy resin mixture according to claim 2, wherein component a) consists of a diglycidyl ether of a divalent phenol.

**4.** An epoxy resin mixture according to claim 2, wherein component a) consists of a diglycidyl ether of bisphenol A or bisphenol F.

**5.** An epoxy resin mixture according to claim 1, wherein the polyoxyalkyleneamine b) is a compound of formula I or II

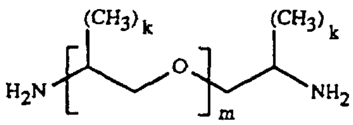

(I)

or

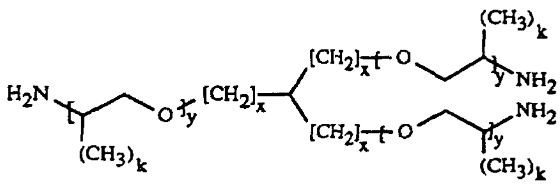

(II),

wherein each k is independently of one another 0 or 1, m is a number from 6 to 70, each x is independently of one another 0 or 1, and each y is independently of one another a number from 2 to 50.

**6.** An epoxy resin mixture according to claim 1, wherein the polyoxyalkyleneamine b) is a polyoxypropylenediamine of formula III

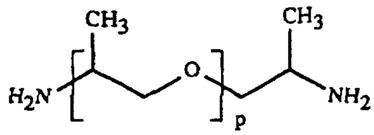

(III),

wherein p is a number from 6 to 40.

**7.** An epoxy resin mixture according to claim 1, wherein the curing agent b) which is different from polyoxyalkyleneamine is dicyandiamide, another polyamine or a polyol.

**8.** An epoxy resin mixture according to claim 1, wherein component c) consists of wollastonite.

**9.** A casting resin composition consisting of the curable epoxy resin mixture according to claim 1.

**10.** Use of epoxy resin mixture according to claim 1 as casting resin composition for encapsulating or casting in of electrical or electronic components.

## Revendications

**1.** Mélange durcissable de résines époxyde, constitué

a) de 90 à 100 % en poids d'un composé d'éther de glycidyle aromatique avec plus d'un groupe éther de glycidyle dans la molécule et 0 à 10 % en poids d'une résine époxyde différente d'éthers de polyglycidyle aromatiques, la somme des résines époxyde s'élevant à 100 % en poids,
b) de 60 à 100 % en poids d'une polyoxyalkylènedi- ou -triamine et 0 à 40 % en poids d'un durcisseur différent de polyoxyalkylèneamines, la somme des durcisseurs s'élevant à 100 % en poids,
c) de la wollastonite ou une charge inorganique, qui contient plus de 50 % en poids de wollastonite, par rapport à la quantité globale de charge inorganique, et éventuellement
d) d'un accélérateur de durcissement et
e) de fibres de verre ou d'additifs usuels pour des résines à mouler à base de résines époxyde.

**2.** Mélange de résines époxyde selon la revendication 1, dans lequel le composant a) est constitué seulement d'une résine époxyde aromatique avec plus d'un groupe éther de glycidyle dans la molécule.

**3.** Mélange de résines époxyde selon la revendication 2, dans lequel le composant a) est constitué d'un éther diglycidylique d'un phénol bivalent.

**4.** Mélange de résines époxyde selon la revendication 2, dans lequel le composant a) est constitué d'un éther diglycidylique de bisphénol A ou de bisphénol F.

**5.** Mélange de résines époxyde selon la revendication 1, dans lequel la polyoxyalkylèneamine b) représente un composé de formule I ou II

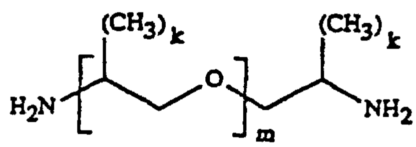

(I)

ou

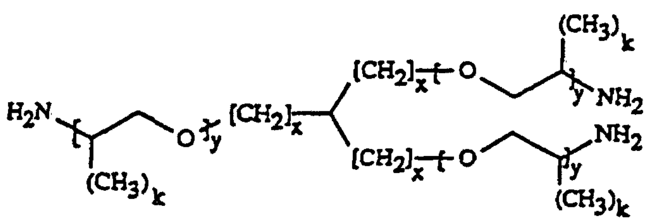

(II),

dans lesquels chaque k indépendamment les uns des autres représente zéro ou le nombre 1, m représente un nombre de 6 à 70, chaque x représente indépendamment les uns des autres zéro ou le nombre 1 et chaque y représente indépendamment les uns des autres un nombre de 2 à 50.

**6.** Mélange de résines époxyde selon la revendication 1, dans lequel la polyoxyalkylèneamine b) représente une polyoxypropylènediamine de formule III

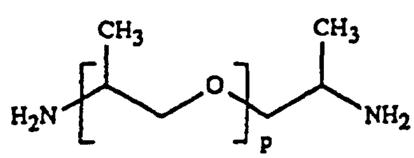

(III),

dans laquelle p est un nombre de 6 à 40.

**7.** Mélange de résines époxyde selon la revendication 1, dans lequel le durcisseur b) différent de la polyoxyalkylèneamine est le dicyandiamide, une autre polyamine ou un polyol.

**8.** Mélange de résines époxyde selon la revendication 1, dans lequel le composant c) est constitué de wollastonite.

**9.** Matière de résine à mouler, constituée du mélange de résines époxyde durcissable selon la revendication 1.

**10.** Utilisation du mélange de résines époxyde selon la revendication 1 comme matière de résine à mouler pour l'enrobage ou l'imprégnation de composants électriques ou électroniques.